Europäisches Patentamt
European Patent Office
Office européen des brevets

(19)

(11) Veröffentlichungsnummer: **0 069 074**
**A2**

(12)
# EUROPÄISCHE PATENTANMELDUNG

(21) Anmeldenummer: **82810270.7**

(22) Anmeldetag: **23.06.82**

(51) Int. Cl.³: **G 03 G 17/04**

(30) Priorität: **29.06.81 CH 4273/81**

(43) Veröffentlichungstag der Anmeldung: **05.01.83**
**Patentblatt 83/1**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Jost, Max, Rebgartenweg 20, CH-4104 Oberwil (CH)**
Erfinder: **Sieber, Werner, Dr., Riehenstrasse 39, CH-4058 Basel (CH)**

(54) **Verwendung von Perylenpigmenten bei der photoelektrophoretischen Bilderzeugung.**

(57) Verfahren zur photoelektrophoretischen Bilderzeugung, wobei eine Suspension lichtempfindlicher Pigmentteilchen zwischen zwei Elektroden, von denen mindestens eine durchsichtig ist, einem elektrischen Feld ausgesetzt und bildmässig belichtet wird, dadurch gekennzeichnet, dass man als lichtempfindliches Pigment ein Perylentetracarbonsäurediimid der Formel

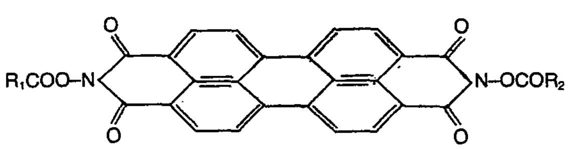
, (I)

verwendet, worin $R_1$ und $R_2$ aliphatische, cycloaliphatische, aromatische oder heterocyclische Reste bedeuten.

Die erfindungsgemäss zu verwendenden Pigmente zeichnen sich durch eine besonders gute photoelektrophoretische Empfindlichkeit bei niedriger Schleierdichte aus.

EP 0 069 074 A2

CIBA-GEIGY AG
Basel (Schweiz)

3-13463/=

Verwendung von Perylenpigmenten bei der photoelektrophoretischen Bilderzeugung

Photoelektrophoretische Verfahren bilden bekanntlich eine Unterklasse der elektrophotographischen Reproduktionsprozesse. Sie können zur Wiedergabe von ein- oder mehrfarbigen Halbton- oder Strichbildvorlagen eingesetzt werden. Photoelektrophoretische Bildwiedergabe-Verfahren sind z.B. in den U.S.-Patentschriften No. 3 384 565, 3 384 566 und 3 385 480 beschrieben. Alle photoelektrophoretischen Verfahren haben als gemeinsames Merkmal die Verwendung von Materieteilchen, die gleichzeitig als Empfänger der die Bildinformation vermittelnden elektromagnetischen Strahlung und als Medium des auf dem endgültigen Träger fixierten Bildes dienen. Die Teilchen müssen also gleichzeitig elektrisch lichtempfindlich sein und eine zur Bilderzeugung geeignete Körperfarbe aufweisen. Bei der praktischen Realisierung des Prinzips der Photoelektrophorese werden meistens Pigmentteilchen, d.h. unlösliche, lichtabsorbierende Pulverteilchen in einem elektrisch isolierenden Trägermedium, zweckmässig einem flüssigen aliphatischen Kohlenwasserstoff verteilt. Die resultierende Suspension wird zwischen zwei Elektroden gebracht, von denen z.B. eine durchsichtig ist. An die Elektroden wird eine elektrische Spannung angelegt, so dass die Pigmentteilchen einem elektrischen Feld ausgesetzt sind. In gewissen Ausprägungen des Verfahrens kann das elektrische Feld auch durch eine Corona-Entladung erzeugt bzw. modifiziert werden. Im übrigen kann dem zeitlich konstanten Feld ein Wechselfeld überlagert werden. Die Suspension kann nun - z.B. durch die durchsichtige Elektrode - mit der die Bildinformation tragenden Strahlung belichtet werden. Die Belichtung kann in gewissen Fällen auch kurz vor Anlegen des elektrischen Feldes erfolgen. Die elektrische Lichtempfindlichkeit der Teilchen äussert sich nun darin, dass die Teilchen

sich in Funktion der eingestrahlten Lichtmenge bevorzugt auf der einen bzw. auf der anderen Elektrode niederschlagen. Dies hat zur Folge, dass auf der einen Elektrode ein positives, auf der anderen ein negatives Abbild des Originals entsteht.

Idealerweise schlagen sich im Dunkeln alle Teilchen auf der einen Elektrode nieder, so dass die gegenüberliegende Elektrode, welche im Rahmen der vorliegenden Erfindung als "Bildelektrode" bezeichnet wird, nur an jenen Stellen Pigmente aufweist, an denen sie belichtet worden ist. Falls diese Bedingung nicht erfüllt ist, weist das Bild einen mehr oder weniger dichten Schleier, d.h. einen bildfremden Untergrund, auf.

Die erwähnte eindeutige Teilchenabscheidung kann durch sogenannte ladungssteuermittel gefördert werden, wie sie z.B. in der U.S.-Patentschrift No. 4 219 614 (Frederick A. Stahly, Eastman Kodak Company) beschrieben sind. Diese Ladungssteuermittel wurden oft aus Flüssigtonersystemen von elektrostatischen Kopierverfahren übernommen. Sie bestehen meistens aus Molekülen, die einen ionisierbaren Teil und einen mit dem Suspensionsmedium gut verträglichen (unpolaren) Teil enthalten. Als gut geeignet haben sich die sogenannten Calcium-Petroleumsulfonate erwiesen, die z.B. von der Firma Orogil S.A. (Frankreich) unter dem Namen OLOA 246F ® vertrieben werden. Es handelt sich dabei um Calciumsalze aromatischer Sulfonsäuren, die eine lange, lineare Kohlenwasserstoffkette enthalten. Das Mol-Gewicht beträgt ungefähr 1000. Die Ladungssteuermittel haben oft gleichzeitig eine dispergierende Wirkung, d.h. die räumliche Verteilung der Pigmentteilchen in der Suspension wird verbessert. Dies wiederum hat einen positiven Einfluss auf die Halbtonwiedergabe und auf das Auflösungsvermögen des Reproduktionsverfahrens. Eine weitere Verbesserung des Dispersionszustandes sowie eine Fixierung des Pigmentpulvers auf dem Bildträger nach dem Verdampfen des Suspensionsmediums kann durch polymere Zusätze erzielt werden, die im Suspensionsmedium löslich

sind. Als Beispiele seien Poly-[12-hydroxystearinsäure], Polyisobutylen, Polymethacrylsäuredodecylester, Polymethacrylsäureoctadecylester sowie Polyvinyltoluol erwähnt.

Als Mass der photoelektrophoretischen Empfindlichkeit eines Wiedergabesystems kann z.B. die Mindestlichtmenge gewählt werden, die benötigt wird, um eine bestimmte Dichte von Pigmentteilchen auf der Bildelektrode zu erzielen. Im Idealfall ist diese Lichtmenge möglichst gering, während andererseits, wie erwähnt, ohne Belichtung sich keine Teilchen auf der Bildelektrode abscheiden sollten.

Bisher sind wenige Magenta-, bzw. Rotpigmente bekannt, welche die oben beschriebenen Anforderungen photoelektrophoretischer Wiedergabesysteme auch nur annähernd erfüllen und die gleichzeitig einen reinen Farbton, eine hohe Farbstärke und Lichtechtheit aufweisen. Der grösste Mangel der vorbekannten Magenta-, bzw. Rotpigmente ist jedoch die Eigenschaft, dass sie in Abwesenheit eines Ladungssteuermittels zu stark flockulierten Suspensionen führen und auf der Bildelektrode einen hohen Schleier bewirken, in Gegenwart eines Ladungssteuermittels aber in ihrer photoelektrophoretischen Empfindlichkeit stark beeinträchtigt werden. Systeme, welche die unten beschriebenen, erfindungsgemässen Pigmente enthalten, zeichnen sich durch besonders gute photoelektrophoretische Empfindlichkeit bei niedriger Schleierdichte aus. Die gemäss GB-PS 1.155.974 als photoelektrophoretische Toner verwendeten Perylentetracarbonsäure-bis-phenylimide haben als Nachteil einen trüben Farbton.

Gegenstand der Erfindung ist ein Verfahren zur photoelektrophoretischen Bilderzeugung, wobei eine Suspension lichtempfindlicher Pigmentteilchen zwischen zwei Elektroden, von denen mindestens eine durchsichtig ist, einem elektrischen Feld ausgesetzt und bildmässig belichtet wird, dadurch gekennzeichnet, dass als lichtempfindliches Pigment ein Perylentetracarbonsäurediimid der Formel

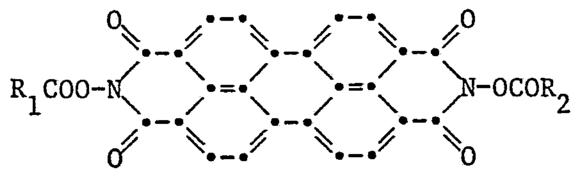 (I)

verwendet wird, worin $R_1$ und $R_2$ aliphatische, cycloaliphatische, aromatische oder heterocyclische Reste bedeuten.

Bedeuten in der Verbindung der Formel (I) $R_1$ und $R_2$ aliphatische Reste, dann vorzugsweise $C_1$-$C_4$-Alkylgruppen z.B. Methyl, Aethyl, n-Propyl-, Isopropyl- oder n-Butylgruppen. Als Beispiel eines cycloaliphatischen Restes sei insbesondere der Cyclohexylrest, als aromatische Reste Phenyl- oder Naphthylreste und als heterocyclische Reste Furan-, Thiophen- oder Pyridinreste genannt.

Bevorzugt sind jene Verbindungen der Formel (I), worin die Reste $R_1$ und $R_2$ identisch sind und einen Rest der Formel

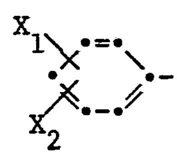

bedeuten, worin $X_1$ H, Halogen, $C_1$-$C_2$-Alkyl- oder -Alkoxy und $X_2$ H, Halogen oder $C_1$-$C_2$-Alkyl bedeuten und insbesondere jene, worin $R_1$ und $R_2$ einen Rest der Formel

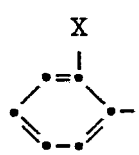

bedeuten, worin X Fluor, Chlor, Brom, Methyl oder Aethyl bedeutet.

Die Pigmentteilchen haben vorzugsweise eine durchschnittliche Grösse von 0,01 - 5 $\mu$, insbesondere 0,05-0,2 $\mu$.

Beispiel 1: 8 Teile N,N'-Bis-(2-chlorbenzoyloxy-)perylentetracarbonsäurediimid (Verbindung I, $R_1=R_2$=o-Chlorbenzoyl) werden mit 92 Teilen Isopar G®, einem verzweigten aliphatischen Kohlenwasserstoffgemisch der Firma Essochem, auf einer Laborsandmühle 4 Stunden gemahlen. Der Pigmentgehalt der Suspension wird anschliessend auf 4,8% eingestellt.

2,5 Teile dieser 4,8%igen Pigmentsuspension, 4 Teile einer 1%igen Lösung von OLOA 246F ® (OROGIL, Frankreich) in Isopar G ® sowie 13,5 Teile Isopar G werden unter Verwendung eines Ultraschallstabes gemischt und unter Lichtausschluss aufbewahrt.

Die Pigmentsuspension wird in einer Belichtungsapparatur geprüft, die aus zwei senkrechten, parallelen, transparenten Elektroden im Abstand von 0,1 mm besteht. Die Elektrodenfläche beträgt 10 $cm^2$, die angelegte elektrische Spannung 875 Volt. Die Zelle wird mittels eines mit einer Halogenlampe versehenen Projektors belichtet. Die Belichtungszeiten werden mit einem Zentralverschluss eingestellt. Nach der Belichtung und Trennung der Elektroden wird die optische Dichte auf der dem Lichteinfall entgegengesetzten Elektrode im Absorptionsmaximum des Toners mittels eines Spektralphotometers gemessen. Die optische Dichte, die ohne vorherige Belichtung auf der Platte gemessen wird, wird im folgenden als Schleierdichte bezeichnet, jene nach Belichtung dagegen als Bilddichte. Die Ergebnisse sind in der folgenden Tabelle zusammengefasst:

| Belichtung: | Optische Dichte: |
|---|---|
| 0 (Schleier) | 0,0055 |
| 110 luxsec | 0,1035 |
| 1722 luxsec | 0,3103 |

Beispiel 2: 3,5 Teile der Verbindung I, 20 Teile einer 1%igen Lösung von OLOA 246F in Isopar G sowie 26,5 Teile Isopar G werden in einer Laborkugelmühle mit Steatitkugeln 72 Stunden gemahlen. 3,4 Teile der resultierenden Suspension, 1,2 Teile einer 1%igen Lösung von OLOA 246F in Isopar G, 10 Teile einer 6%igen Lösung von Poly-[12-hydroxystearinsäure] sowie 5,4 Teile Isopar G werden unter Verwendung eines Ultraschallstabes gemischt und unter Lichtausschluss aufbewahrt.

Die obige Tonerdispersion wird wie in Beispiel 1, jedoch unter Einsatz einer Spannung von 1050 Volt, geprüft. Die Ergebnisse sind aus folgender Tabelle ersichtlich:

| Belichtung: | Optische Dichte: |
|---|---|
| 0 (Schleier) | 0,0058 |
| 74 luxsec | 0,054 |
| 144 luxsec | 0,201 |
| 4000 luxsec | 0,855 |

Beispiel 3: 12 g der Verbindung I werden in 220 ml Dimethylformamid 26 Stunden auf 100°C (Badtemperatur) erhitzt. Das Pigment wird daraufhin abzentrifugiert, zweimal mit Toluol gewaschen und anschliessend getrocknet. 3,5 Teile des so behandelten Pigmentes werden mit 46,5 Teilen Isopar G in einem verschliessbaren Glasbehälter mit Steatitkugeln 72 Stunden gemahlen.

6,8 Teile der resultierenden Suspension, 6 Teile einer 1%igen Lösung von OLOA 246F in Isopar G, 13,3 Teile einer 6%igen Lösung von Poly-[12-hydroxystearinsäure] sowie 23,9 Teile Isopar G werden unter Ultraschallbehandlung gemischt und unter Lichtausschluss aufbewahrt. Die so erhaltene Tonerdispersion wird auf einer Bild-Erzeugungsapparatur geprüft, die im wesentlichen aus einer waagrechten NESA®-Glas-Elektrode und einer mit Papier bespannten Stahlwalze besteht. Die Walze rollt über die mit dem Toner bedeckte Platte, während letztere von unten bildmässig belichtet wird. Im vorliegenden Fall wird ein Stufen-Graukeil von unten auf die transparente Elektrode projiziert, während zwischen der Platte und der Walze eine Gleichspannung von 700V angelegt wird. Das auf dem Papier durch die Wanderung von Pigmentteilchen entstandene Bild wird remissionsdensitometrisch ausgewertet. Hierbei ergibt sich eine Schleierdichte von 0,02, eine Empfindlichkeit von 4,6 luxsec, und eine maximale Bilddichte von über 0,5. Die maximale Gradationssteilheit beträgt etwa 0,4.

Beispiel 4: Die in Beispiel 3 beschriebene Tonerdispersion wird nach dem gleichen Verfahren geprüft wie in Beispiel 3, mit der Ausnahme, dass ein KODACOLOR® - Farbnegativ durch einen KODAK WRATTEN®-Filter No. 58 auf die transparente Elektrode projiziert wird. Zuerst wird mittels eines anderen Toners die Gelb-Komponente aufgebracht, nach Reinigung der Walze und Trocknung des Bildes wird unter Verwendung der erfindungsgemässen Tonerdisperision die Magenta-Komponente zur Abbildung gebracht und anschliessend in gleicher Weise die Cyan-Komponente, diese unter Verwendung eines β-Kupferphthalocyanin-Toners. Es wird ein polychromatisches Positivbild mit natürlichen Farben und guter Halbtonwiedergabe erhalten.

Beispiel 5 (Stand der Technik): 8 Teile C.I. Pigmentrot 23 werden in 92 Teilen Isopar G auf einer Laborsandmühle 6 Stunden gemahlen. Anschliessend wird die Pigmentkonzentration auf 6% eingestellt.

2 Teile der 6%igen Pigmentsuspension, 3 Teile einer 1%igen Lösung von OLOA 246F sowie 15 Teile Isopar G werden unter Ultraschallbehandlung gemischt. Die resultierende Tonerdispersion wird wie in

Beispiel 1 geprüft. Die angelegte elektrische Spannung beträgt 1050V. Die Ergebnisse sind aus untenstehender Tabelle ersichtlich (Es handelt sich um Mittelwerte und Standardabweichungen aus je 4 Messungen):

| Belichtung: | Optische Dichte: |
|---|---|
| 0 (Schleier | 0,0025 ± 0,0017 |
| 2886 luxsec | 0,0035 ± 0,0006 |
| 85760 luxsec | 0,0045 ± 0,0006 |

Beispiel 6 (Stand der Technik): 2-Methylchinacridon wird durch wiederholte Extraktion mit Tetrachlorkohlenstoff gereinigt und anschliessend getrocknet. 3,5 Teile des gereinigten Pigmentes werden mit 46,5 Teilen Isopar G in einer Labor-Kugelmühle mit Steatitkugeln 72 Stunden gemahlen. 1,7 Teile der resultierenden Suspension, 1,5 Teile einer 1%igen Lösung von OLOA 246F sowie 16,8 Teile Isopar G werden unter Ultraschallbehandlung gemischt. Die erhaltene Tonerdispersion wird wie in Beispiel 1 bei einer Spannung von 875 Volt geprüft. Die Ergebnisse sind aus folgender Tabelle ersichtlich:

| Belichtung: | Optische Dichte: |
|---|---|
| 0 (Schleier) | 0,092 ± 0,015 |
| 2886 luxsec | 0,191 ± 0,024 |
| 19776 luxsec | 0,250 ± 0,027 |

Beispiel 7 (Stand der Technik): 3,5 Teile 2-Methylchinacridon, 30 Teile einer 1%igen Lösung von OLOA 246F in Isopar G sowie 16,5 Teile Isopar G werden in einer Laborkugelmühle 72 Stunden gemahlen.

1,7 Teile der resultierenden Suspension, 1 Teil einer 1%igen Lösung von OLOA 246F sowie 17,3 Teile Isopar G werden unter Ultraschallbehandlung gemischt. Die erhaltene Tonerdispersion wird wie in Beispiel 1 geprüft. Die Ergebnisse sind aus folgender Tabelle ersichtlich:

| Belichtung: | Optische Dichte: |
| --- | --- |
| 0 (Schleier) | 0,0155 ± 0,0013 |
| 2886 luxsec | 0,0390 ± 0,0016 |
| 19776 luxsec | 0,0500 ± 0,0022 |

Patentansprüche:

1. Verfahren zur photoelektrophoretischen Bilderzeugung, wobei eine Suspension lichtempfindlicher Pigmentteilchen zwischen zwei Elektroden, von denen mindestens eine durchsichtig ist, einem elektrischen Feld ausgesetzt und bildmässig belichtet wird, dadurch gekennzeichnet, dass man als lichtempfindliches Pigment ein Perylentetracarbonsäurediimid der Formel

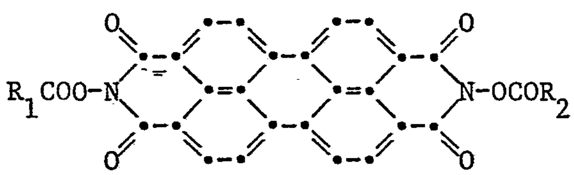

(I)

verwendet, worin $R_1$ und $R_2$ aliphatische, cycloaliphatische, aromatische oder heterocyclische Reste bedeuten.

2. Verfahren gemäss Anspruch 1, dadurch gekennzeichnet, dass man Perylentetracarbonsäurediimide der Formel (I) verwendet, worin $R_1$ und $R_2$ Reste der Formel

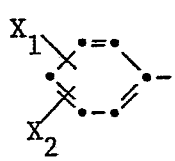

bedeuten, worin $X_1$ H, Halogen, $C_1$-$C_4$-Alkyl- oder -Alkoxy und $X_2$ H, Halogen oder $C_1$-$C_2$-Alkyl bedeuten.

3. Verfahren gemäss Anspruch 1, dadurch gekennzeichnet, dass man Perylentetracarbonsäurediimide der Formel (I) verwendet, worin $R_1$ und $R_2$ Reste der Formel

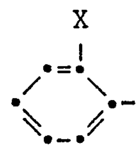

(II)

bedeutet, worin X Fluor, Chlor, Brom, Methyl oder Alkyl bedeutet.

4. Verfahren gemäss Anspruch 1, dadurch gekennzeichnet, dass man als Zusatzstoff ein Ladungssteuerungsmittel verwendet.

5. Verfahren gemäss Anspruch 4, dadurch gekennzeichnet, dass man als Ladungssteuerungsmittel Calciumsalze aromatischer Sulfonsäuren enthaltend im aromatischen Rest einen langkettigen linearen Kohlenwasserstoffrest verwendet.

6. Verfahren gemäss Ansprüchen 1 und 4, dadurch gekennzeichnet, dass man als Zusatzstoff ein in der Suspensionsflüssigkeit lösliches Polymer verwendet.

7. Verfahren gemäss Anspruch 6, dadurch gekennzeichnet, dass das Polymer Poly-(12-hydroxystearinsäure) ist.

8. Verfahren gemäss Ansprüchen 1-7, dadurch gekennzeichnet, dass die Pigmente eine Teilchengrösse von 0,01-5 $\mu$ aufweisen.